(19)

Europäisches
Patentamt
European
Patent Office
Office européen
des brevets

(11) **EP 4 538 902 A1**

(12) **EUROPEAN PATENT APPLICATION**
published in accordance with Art. 153(4) EPC

(43) Date of publication:
**16.04.2025 Bulletin 2025/16**

(21) Application number: **23829989.5**

(22) Date of filing: **15.06.2023**

(51) International Patent Classification (IPC):
***G06F 16/2457*** (2019.01)   ***G06F 16/25*** (2019.01)

(52) Cooperative Patent Classification (CPC):
**G06F 16/2457; G06F 16/25**

(86) International application number:
**PCT/CN2023/100467**

(87) International publication number:
**WO 2024/001809 (04.01.2024 Gazette 2024/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.06.2022 CN 202210743393**

(71) Applicant: **Huawei Technologies Co., Ltd.
Shenzhen, Guangdong 518129 (CN)**

(72) Inventors:
• **ZHANG, Xiaolian
Shenzhen, Guangdong 518129 (CN)**

• **LIU, Dugang
Nanjing, Jiangsu 211189 (CN)**
• **LIN, Jiangxu
Shenzhen, Guangdong 518129 (CN)**
• **HE, Mingkai
Nanjing, Jiangsu 211189 (CN)**
• **LUO, Jinwei
Nanjing, Jiangsu 211189 (CN)**
• **PAN, Weike
Nanjing, Jiangsu 211189 (CN)**
• **MING, Zhong
Nanjing, Jiangsu 211189 (CN)**

(74) Representative: **Pfenning, Meinig & Partner mbB
Patent- und Rechtsanwälte
Theresienhöhe 11a
80339 München (DE)**

(54) **RECOMMENDATION METHOD AND APPARATUS, AND ELECTRONIC DEVICE**

(57) A recommendation method is provided, where the method includes: determining a user-event graph UEG based on training data, where the UEG includes a user node, an item node, a context node, and an intent node, and the intent node is separately connected to the user node, the item node, and the context node; performing graph convolution on a user feature, an item feature, a context feature, and an intent feature based on the UEG, to obtain a target feature set, where the target feature set includes a target user feature, a target item feature, and a target context feature; and recommending a target item to a target user based on the target feature set and a context feature of the target user in a target environment, where the target item is an item that matches the context feature in the target environment. In this way, the user node, the item node, and the context node are associated through the intent node, so that the context feature can be integrated into graph convolution, thereby obtaining a better user feature and a better item feature, and improving accuracy of a subsequent recommendation service.

Determine a user-event graph (UEG) based on training data, where the UEG includes: a user node, an item node, a context node, and an intent node, the intent node is separately connected to the user node, the item node, and the context node, the user node is a node on which a user feature of a user is located, the item node is a node on which an item feature of an item selected by the user is located, the context node is a node on which a context feature that affects selection of the item by the user is located, and the intent node is a node on which an intent feature of an intent of selecting the item by the user is located — S501

Perform graph convolution on the user feature, the item feature, the context feature, and the intent feature based on the UEG to obtain a target feature set, where the target feature set includes a target user feature, a target item feature, and a target context feature — S502

Recommend a target item to a target user based on the target feature set and a context feature of the target user in a target environment, where the target item is an item that matches the context feature in the target environment — S503

FIG. 5

EP 4 538 902 A1

## Description

This application claims priority to Chinese Patent Application No. 202210743393.X, filed with the China National Intellectual Property Administration on June 28, 2022 and entitled " RECOMMENDATION METHOD AND APPARATUS, AND ELECTRONIC DEVICE ", which is incorporated herein by reference in its entirety.

## TECHNICAL FIELD

This application relates to the field of artificial intelligence (artificial intelligence, AI) technologies, and in particular, to a recommendation method and apparatus, and an electronic device.

## BACKGROUND

A recommendation service is an important tool for reducing information overload and improving user experience, and is also an important means of AI monetization. A key data source for establishing the recommendation service is interaction (for example, tapping) between a user and an item. Interaction data between the user and the item may be used to predict user preferences and recommend, to the user, items that the user is interested in. Accuracy of the items recommended to the user greatly affects user experience. Therefore, how to improve accuracy of the recommendation service is a technical problem that urgently needs to be resolved currently.

## SUMMARY

This application provides a recommendation method and apparatus, an electronic device, a computer storage medium, a computer product, and a chip, to integrate a context feature into graph convolution, thereby improving accuracy of a recommendation service.

According to a first aspect, this application provides a recommendation method, where the method includes: determining a user-event graph (UEG) based on training data, where the UEG includes a user node, an item node, a context node, and an intent node, the intent node is separately connected to the user node, the item node, and the context node, the user node is a node on which a user feature of a user is located, the item node is a node on which an item feature of an item selected by the user is located, the context node is a node on which a context feature that affects selection of the item by the user is located, and the intent node is a node on which an intent feature of an intent of selecting the item by the user is located; performing graph convolution on the user feature, the item feature, the context feature, and the intent feature based on the UEG, to obtain a target feature set, where the target feature set includes a target user feature, a target item feature, and a target context feature; and recommending a target item to a target user based on the target feature set and a context feature of the target user in a target environment, where the target item is an item that matches the context feature in the target environment.

In this way, the user node, the item node, and the context node are associated through the intent node, so that the context feature can be integrated into the graph convolution, thereby obtaining a better user feature and a better item feature, and improving accuracy of a subsequent recommendation service.

In a possible implementation, the intent feature is obtained based on the user feature and the context feature.

In a possible implementation, there are a plurality of context features. The method further includes: separately determining weight values of the context features based on the user feature and the context feature; and determining the intent feature based on the context features and the weight values of the context features.

In a possible implementation, the performing graph convolution on the user feature, the item feature, the context feature, and the intent feature based on the UEG, to obtain a target user feature specifically includes: determining, based on a first intent feature at an $(h-1)^{th}$ layer in a convolutional graph and an item feature that is associated with the first intent feature and that is at the $(h-1)^{th}$ layer, a first user feature that is associated with the first intent feature and that is at an $h^{th}$ layer in the convolutional graph; and when a quantity of convolution times in the convolutional graph reaches a preset quantity of times, determining the target user feature based on first user features obtained at layers in the convolutional graph.

Further, the method further includes: when there are a plurality of item features that are associated with the first intent feature and that are at the $(h-1)^{th}$ layer, for any item feature associated with the first intent feature, separately determining, based on the any item feature and the first intent feature at the $(h-1)^{th}$ layer, a second user feature that is associated with the first intent feature and that is at the $h^{th}$ layer, to obtain a plurality of second user features; determining, based on the plurality of second user features, the first user feature that is associated with the first intent feature and that is at the $h^{th}$ layer; and when the quantity of convolution times in the convolutional graph reaches the preset quantity of times, determining the target user feature based on the first user features obtained at the layers in the convolutional graph.

In a possible implementation, the performing graph convolution on the user feature, the item feature, the context feature, and the intent feature based on the UEG, to obtain a target item feature specifically includes: determining, based on a user feature that is associated with a first item feature and that is at the $(h-1)^{th}$ layer in the convolutional graph and an intent feature that is associated with the first item feature and that is at the $(h-1)^{th}$ layer, a first item feature at the $h^{th}$ layer in the convolutional graph; and when the quantity of convolution times in the convolutional graph reaches the preset quantity of times, determining the target item feature based on first item features obtained at the layers in the convolutional graph.

Further, the method further includes: when there are a plurality of user features that are associated with the first item feature and that are at the $(h-1)^{th}$ layer, for any user feature associated with the first intent feature, separately determining, based on the any user feature and the intent feature that is associated with the first item feature and that is at the $(h-1)^{th}$ layer, a second item feature at the $h^{th}$ layer, to obtain a plurality of second item features; determining, based on the plurality of second item features, the first item feature at the $h^{th}$ layer; and when the quantity of convolution times in the convolutional graph reaches the preset quantity of times, determining the target item feature based on the first item features obtained at the layers in the convolutional graph.

In a possible implementation, the performing graph convolution on the user feature, the item feature, the context feature, and the intent feature based on the UEG, to obtain a target context feature specifically includes: determining, based on a user feature and an item feature that are associated with the first intent feature and that are at the $(h-1)^{th}$ layer in the convolutional graph, a first intent feature at the $h^{th}$ layer in the convolutional graph; determining, based on the first intent feature at the $h^{th}$ layer, a first context feature that is associated with the first intent feature and that is at the $(h-1)^{th}$ layer, and a first user feature that is associated with the first intent feature and that is at the $h^{th}$ layer, a first context feature at the $h^{th}$ layer; and when the quantity of convolution times in the convolutional graph reaches the preset quantity of times, determining the target context feature based on first context features obtained at the layers in the convolutional graph.

Further, the method further includes: when there are a plurality of user features that are associated with the first context feature and that are at the $h^{th}$ layer, for any user feature associated with the first context feature, separately determining, based on the any user feature, the first intent feature at the $h^{th}$ layer, and the first context feature that is associated with the first intent feature and that is at the $(h-1)^{th}$ layer, a second context feature at the $h^{th}$ layer, to obtain a plurality of second context features; determining, based on the plurality of second context features, the first context feature at the $h^{th}$ layer; and when the quantity of convolution times in the convolutional graph reaches the preset quantity of times, determining the target context feature based on first context features obtained at the layers in the convolutional graph.

In a possible implementation, the method further includes: when there are a plurality of first intent features associated with one first context feature, screening the plurality of first intent features in at least one convolution process, to obtain a required first intent feature, where a similarity value between the required first intent feature and the first context feature is greater than a preset similarity value.

According to a second aspect, this application provides a recommendation apparatus, including: a graph construction module, configured to determine a user-event graph (UEG) based on training data, where the UEG includes a user node, an item node, a context node, and an intent node, the intent node is separately connected to the user node, the item node, and the context node, the user node is a node on which a user feature of a user is located, the item node is a node on which an item feature of an item selected by the user is located, the context node is a node on which a context feature that affects selection of the item by the user is located, and the intent node is a node on which an intent feature of an intent of selecting the item by the user is located; a graph convolution module, configured to perform graph convolution on the user feature, the item feature, the context feature, and the intent feature based on the UEG, to obtain a target feature set, where the target feature set includes a target user feature, a target item feature, and a target context feature; and a recommendation module, configured to recommend a target item to a target user based on the target feature set and a context feature of the target user in a target environment, where the target item is an item that matches the context feature in the target environment.

In a possible implementation, the intent feature is obtained based on the user feature and the context feature.

In a possible implementation, there are a plurality of context features. The graph convolution module is further configured to: determine weight values of the context features based on the user feature and the context feature; and determine the intent feature based on the context features and the weight values of the context features.

In a possible implementation, the graph convolution module is specifically configured to: determine, based on a first intent feature at an $(h-1)^{th}$ layer in a convolutional graph and an item feature that is associated with the first intent feature and that is at the $(h-1)^{th}$ layer, a first user feature that is associated with the first intent feature and that is at an $h^{th}$ layer in the convolutional graph; and when a quantity of convolution times in the convolutional graph reaches a preset quantity of times, determine the target user feature based on first user features obtained at layers in the convolutional graph.

Further, the graph convolution module is further configured to: when there are a plurality of item features that are associated with the first intent feature and that are at the $(h-1)^{th}$ layer, for any item feature associated with the first intent feature, separately determine, based on the any item feature and the first intent feature at the $(h-1)^{th}$ layer, a second user feature that is associated with the first intent feature and that is at the $h^{th}$ layer, to obtain a plurality of second user features; determine, based on the plurality of second user features, the first user feature that is associated with the first intent feature and that is at the $h^{th}$ layer; and when the quantity of convolution times in the convolutional graph reaches the preset quantity of times, determine the target user feature based on the first user features obtained at the layers in the convolutional graph.

In a possible implementation, the graph convolution module is specifically configured to: determine, based on a user feature that is associated with a first item feature and that is at the $(h-1)^{th}$ layer in the convolutional graph and an intent feature that is associated with the first item feature and that is at the $(h-1)^{th}$ layer, the first item feature at the $h^{th}$ layer in the convolutional graph; and when the quantity of convolution times in the convolutional graph reaches the preset quantity of times, determine the target item feature based on first item features obtained at the layers in the convolutional graph.

Further, the graph convolution module is further configured to: when there are a plurality of user features that are associated with the first item feature and that are at the $(h-1)^{th}$ layer, for any user feature associated with the first intent feature, separately determine, based on the any user feature and the intent feature that is associated with the first item feature and that is at the $(h-1)^{th}$ layer, a second item feature at the $h^{th}$ layer, to obtain a plurality of second item features; determine, based on the plurality of second item features, the first item feature at the $h^{th}$ layer; and when the quantity of convolution times in the convolutional graph reaches the preset quantity of times, determine the target item feature based on the first item features obtained at the layers in the convolutional graph.

In a possible implementation, the graph convolution module is specifically configured to: determine a first intent feature at the $h^{th}$ layer in the convolutional graph based on an item feature and a user feature that are associated with the first intent feature and that are at the $(h-1)^{th}$ layer in the convolutional graph; determine, based on the first intent feature at the $h^{th}$ layer, a first context feature that is associated with the first intent feature and that is at the $(h-1)^{th}$ layer, and a first user feature that is associated with the first intent feature and that is at the $h^{th}$ layer, a first context feature at the $h^{th}$ layer; and when the quantity of convolution times in the convolutional graph reaches the preset quantity of times, determine the target context feature based on first context features obtained at the layers in the convolutional graph.

Further, the graph convolution module is further configured to: when there are a plurality of user features that are associated with the first context feature and that are at the $h^{th}$ layer, for any user feature associated with the first context feature, separately determine, based on the any user feature, the first intent feature at the $h^{th}$ layer, and a first context feature that is associated with the first intent feature and that is at the $(h-1)^{th}$ layer, a second context feature at the $h^{th}$ layer, to obtain a plurality of second context features; determine, based on the plurality of second context features, the first context feature at the $h^{th}$ layer; and when the quantity of convolution times in the convolutional graph reaches the preset quantity of times, determine the target context feature based on first context features obtained at the layers in the convolutional graph.

In a possible implementation, the graph convolution module is further configured to: when there are a plurality of first intent features associated with one first context feature, screen the plurality of first intent features in at least one convolution process, to obtain a required first intent feature, where a similarity value between the required first intent feature and the first context feature is greater than a preset similarity value.

According to a third aspect, this application provides an electronic device, including: at least one memory, configured to store a program; and at least one processor, configured to execute the program stored in the memory. When the program stored in the memory is executed, the processor is configured to perform the method described in the first aspect or any one of the possible implementations of the first aspect.

According to a fourth aspect, this application provides a computer-readable storage medium, where the computer-readable storage medium stores a computer program. When the computer program is run on a processor, the processor is caused to perform the method described in the first aspect or any one of the possible implementations of the first aspect.

According to a fifth aspect, this application provides a computer program product. When the computer program product runs on a processor, the processor is caused to perform the method described in the first aspect or any one of the possible implementations of the first aspect.

According to a sixth aspect, this application provides a chip, including at least one processor and an interface. The at least one processor obtains program instructions or data through the interface. The at least one processor is configured to execute the program instructions, to implement the method described in the first aspect or any one of the possible implementations of the first aspect.

It may be understood that, for beneficial effects of the second aspect to the sixth aspect, refer to related descriptions in the first aspect. Details are not described herein again.

## BRIEF DESCRIPTION OF DRAWINGS

The following briefly describes the accompanying drawings used in descriptions of embodiments or the conventional technology.

FIG. 1 is a diagram of a structure of a graph neural network according to an embodiment of this application;
FIG. 2 is a diagram of a structure of a service recommendation model according to an embodiment of this application;

FIG. 3 is a diagram of a user-event graph according to an embodiment of this application;

FIG. 4 is a diagram of another user-event graph according to an embodiment of this application;

FIG. 5 is a schematic flowchart of a recommendation method according to an embodiment of this application;

FIG. 6 is a diagram of a structure of a recommendation apparatus according to an embodiment of this application; and

FIG. 7 is a diagram of a structure of a chip according to an embodiment of this application.

## DESCRIPTION OF EMBODIMENTS

The term "and/or" in this specification describes an association relationship between associated objects and represents that three relationships may exist. For example, A and/or B may represent the following three cases: Only A exists, both A and B exist, and only B exists. The character "/" in this specification indicates an "or" relationship between the associated objects. For example, A/B indicates A or B.

In the specification and claims of this application, the terms "first", "second", and the like are used for distinguishing between different objects, but are not used for describing a particular order of the objects. For example, a first response message, a second response message, and the like are used to distinguish between different response messages, but do not indicate a particular order of the response messages.

In addition, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example" or the like is intended to present a relative concept in a specific manner.

In the descriptions of embodiments of this application, unless otherwise specified, "a plurality of" means two or more. For example, a plurality of processing units are two or more processing units, and a plurality of elements are two or more elements.

First, some terms in embodiments of this application are described.

### 1. User feature

The user feature is a feature for identifying different users, for example, an identifier, a gender, an age, a region, an occupation, and registration information on a web page of a user.

### 2. Item feature

The item feature is a feature for identifying an item (item) selected by a user, for example, an attribute of the item selected by the user. For example, when the item is an e-commerce product, the item feature may be a title, a type, a size, or the like of the item; when the item is a music product, the item feature may be a category, a name, a singer, a composer, a lyricist, or the like of a song; or when the item is a blog product, the item feature may be a title, an author, a category, or the like of an article.

### 3. Context feature

The context feature is an external factor that affects decision-making of a user during interaction between the user and an item. An example in which the user browses an article is used. The context feature may include one or more of a keyword, an author, and a category of the article, a location of the user, time, and the like.

The following describes technical solutions in embodiments of this application.

Generally, a context feature may have a significant impact on selection of an item by a user. For example, in restaurant recommendation, unsuitable candidates may be effectively filtered out based on current time and a current location; and in e-commerce, a tapping behavior in a recent session is a strong signal for a next purchase of the user. Therefore, integrating the context feature into a context aware recommendation system (context aware recommendation system, CARS) in user preference prediction can greatly improve accuracy of a recommendation result output by the CARS.

In the CARS system, a matrix factorization (matrix factorization, MF) method, a factorization machine (factorization machine, FM) method, or a neural network (neural network, NN) method may be used to perform modeling on interaction between a user feature, an item feature, and the context feature, to complete a recommendation service. However, both the matrix factorization method and the factorization machine method are based on shallow-layer models, and it is difficult to process complex user behaviors or data input by using these methods. In the neural network method, high-order structure information in data is usually ignored, in other words, association between data is ignored. As a result, it is difficult to learn of the high-order structure information in the data. In addition, there is a graph neural network (graph neural network, GNN) that is in a neural network and that can integrate neighbor information by using a message transfer mechanism, and allow a node to access information of a high-order neighbor through multi-layer stacking. Therefore, the graph neural network may be used to improve accuracy of a recommendation service.

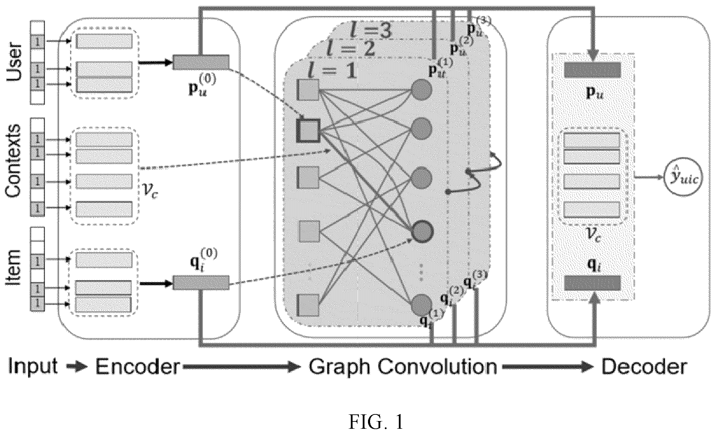

For example, FIG. 1 shows a structure of a graph neural network. As shown in FIG. 1, the graph neural network may include an encoder (Encoder), graph convolution layers (graph convolution layers, GCLs), and a decoder (Decoder).

An input of the encoder includes three features: a user (user) feature, an item (item) feature, and a context (contexts) feature. The encoder may encode the user feature and the item feature each into a multi-hot form, and then perform average pooling on encoded features to obtain initial representations: $p_u$ and $q_i$. The context feature is not refined (refine) at the graph convolution layers. Therefore, average pooling is not performed on the context feature, and only a set $v_c$ of context features is obtained.

At the graph convolution layers, convolution operations may be performed on $p_u$, $v_c$, and $q_i$ that are output by the encoder. However, an edge feature is not considered in standard graph convolution, and an edge usually has a context feature. As a result, a result output by the graph convolution layers is poor, and accuracy of a subsequent recommendation service is affected. The decoder may perform a decoding operation on the result output by the graph convolution layers, to obtain a required result.

To improve accuracy of a recommendation service, embodiments of this application provide a service recommendation model. The model integrates a context feature into graph convolution, to obtain a better user feature and a better item feature, thereby improving accuracy of subsequent recommendation services.

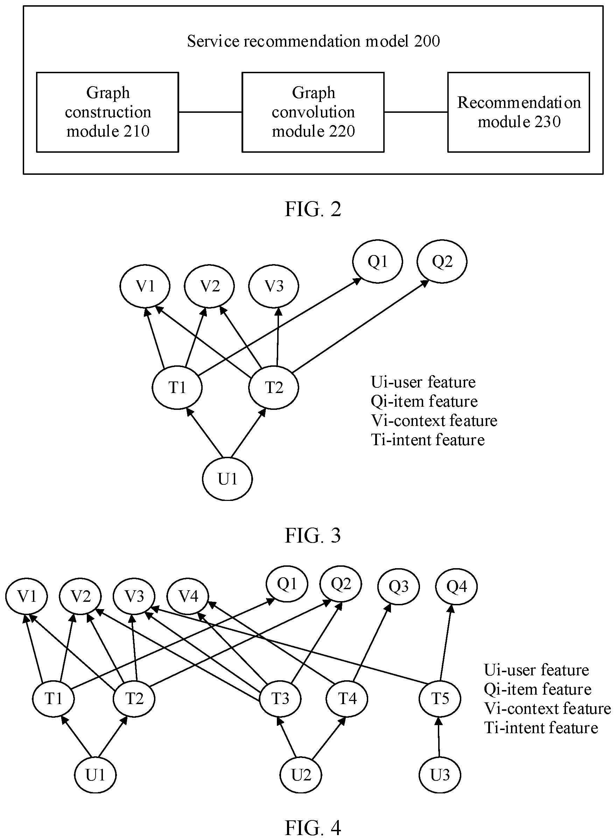

For example, FIG. 2 shows an architecture of a service recommendation model. As shown in FIG. 2, a service recommendation model 200 may include a graph construction module 210, a graph convolution module 220, and a recommendation module 230.

The graph construction module 210 is mainly configured to construct, based on training data, a user-event graph (user-event graph, UEG) between "a user feature, an item feature, and a context feature". The training data may include data associated with the user feature, data associated with the item feature, and data associated with the context feature. The user feature, the item feature, and the context feature can be obtained by encoding corresponding data.

The graph construction module 210 may associate the "user feature, the item feature, and the context feature" by constructing an "intent node (intent node)". For example, one user feature is used as an example. The UEG constructed by the graph construction module 210 may be shown in FIG. 3. In FIG. 3, $U_i$ represents the user feature, $Q_i$ represents the item feature, $V_i$ represents the context feature, and $T_i$ represents an intent feature. A node on which the intent feature is located in FIG. 3 is the intent node. It can be seen from FIG. 3 that the user feature, the item feature, and the context feature are associated together by using the node on which the intent feature is located. The intent feature may be understood as a feature corresponding to an intent of selecting an item by a user.

It may be understood that the UEG constructed by the graph construction module 210 may include the intent node, a user node, an item node, and a context node. The intent node is the node on which the intent feature is located, the user node is a node on which the user feature is located, the item node is a node on which the item feature is located, and the context node is a node on which the context feature is located. In the constructed UEG, one intent feature may correspond to one item feature, and one item feature may correspond to one intent feature or may correspond to a plurality of intent features. For example, as shown in FIG. 4, in a UEG, an item feature $Q_2$ separately corresponds to an intent feature $T_2$ and an intent feature $T_3$, and an item feature $Q_4$ corresponds to an intent feature $T_5$. When there is only one user feature in the constructed UEG, one item feature corresponding to the user feature may also correspond to one intent feature or a plurality of intent features, and one intent feature corresponding to a user may correspond to one item feature.

The intent feature may be obtained based on the user feature and the context feature. In some embodiments, the intent feature may be determined by using the following "Formula 1".

$$\begin{cases} \alpha_i = softmax\left(W_0^T Relu(W_1 U_e + W_2 V_i + y)\right) \\ T_c = \sum_{i=1} \alpha_i V_i \end{cases} \quad \text{(Formula 1)}$$

$U_e$ is an $e^{th}$ user feature, $T_c$ is a $c^{th}$ intent feature corresponding to $U_e$, $V_i$ is an $i^{th}$ context feature corresponding to $U_e$, $\alpha_i$ is a weight value of the $i^{th}$ context feature, $W_0 \in R^{d \times 1}$, $W_1$ and $W_2 \in R^{d \times d}$, and $y \in R^{d \times 1}$. For example, still refer to FIG. 3. $T_1 = \alpha_{11} * V_1 + \alpha_{12} * V_2$ and $T_2 = \alpha_{21} * V_1 + \alpha_{22} * V_2 + \alpha_{23} * V_3$ may be determined based on the foregoing "Formula 1".

The graph convolution module 220 is mainly configured to perform a convolution operation on the UEG constructed by the graph construction module 210, to obtain a required user feature, item feature, and context feature. Because the intent node is added to the constructed UEG, a conventional graph convolution method cannot be used. Therefore, embodiments of this application provide a graph convolution method. In the graph convolution method, a key function of the intent node can be fully used to explore a relationship between the user feature, the item feature, and the context feature. The following separately describes convolution methods of the features.

(1) User feature

For the user feature, the intent node may be used as a bridge to transfer information about the item feature and the context feature to the user feature. Details may be shown in the following "Formula 2".

$$p_{u^i}^{(h)} = p_{v^i}^{(h-1)} + p_{t^i}^{(h-1)} \quad \text{(Formula 2)}$$

Herein, $p_{u^i}^{(h)}$ is a user feature of an $i^{th}$ user at an $h^{th}$ layer in a convolutional graph; $p_{t^i}^{(h-1)}$ is an intent feature that is associated with the $i^{th}$ user and that is at an $(h-1)^{th}$ layer; and $p_{v^i}^{(h-1)}$ is an item feature that is associated with the intent feature $p_{t^i}^{(h-1)}$ and that is at the $(h-1)^{th}$ layer.

For each user feature, when there are a plurality of item features associated with the user feature, one user feature may be calculated based on each item feature. In this case, a plurality of user features may be obtained. To reduce a subsequent calculation amount and improve a calculation speed, these user features may be aggregated into one user feature, and the user feature is used as a user feature at the $h^{th}$ layer, so that items with which a user interacts can be intuitively learned of. For example, the plurality of user features may be aggregated into one user feature in a manner of averaging, where aggregation may be performed by using the following "Formula 3".

$$p_u^h = \frac{1}{\sqrt{|\{i|u^i=u\}|}} \Sigma_{\{i|u^i=u\}} p_{u^i,x}^{(h)} \quad (3)$$

$p_u^h$ is a user feature obtained through aggregation at the $h^{th}$ layer, and $p_{u^i,x}^{(h)}$ is a user feature obtained at the $h^{th}$ layer based on an $x^{th}$ item feature.

Finally, after a quantity of convolution times reaches a preset quantity of times, user features may be refined based on the user features obtained at convolution layers, to obtain a final user feature. For example, the user features obtained at the convolution layers may be averaged, and an obtained average value is used as a finally required user feature, where the following "Formula 4" may be used for calculation.

$$\hat{p}_u = \frac{1}{H+1} \Sigma_{h=0}^{H} p_u^{(h)} \quad \text{(Formula 4)}$$

Herein, $\hat{p}_u$ is the user feature finally obtained through calculation, $H$ is a quantity of the convolution layers, and $p_u^{(h)}$ is the user feature obtained at the $h^{th}$ layer.

It should be understood that, in addition to performing refining in an average manner, refining may be performed in another manner (for example, by using a variance). This is not limited herein. In addition, after convolution is completed, in addition to refining the user feature, a user feature obtained at a last time may be directly used as the finally required user feature. This may be specifically determined based on an actual situation, and this is not limited herein.

(2) Item feature

For the item feature, the intent node may be used as a bridge to transfer information about the user feature and the context feature to the item feature. Details may be shown in the following "Formula 5".

$$p_{v^i}^{(h)} = p_{u^i}^{(h-1)} + p_{t^i}^{(h-1)} \quad \text{(Formula 5)}$$

Herein, $p_{v^i}^{(h)}$ is an item feature that is associated with the $i^{th}$ user and that is at the $h^{th}$ layer in the convolutional graph; $p_{u^i}^{(h-1)}$ is a user feature of the $i^{th}$ user at the $(h-1)^{th}$ layer in the convolutional graph; and $p_{t^i}^{(h-1)}$ is an intent

feature that is associated with the item feature $p_{v^i}^{(h)}$ and that is at the $(h - 1)^{th}$ layer.

For each item feature, when there are a plurality of user features associated with the item feature, one item feature may be calculated based on each user feature. In this case, a plurality of item features may be obtained. To reduce a subsequent calculation amount and improve a calculation speed, these item features may be aggregated into one item feature, and the item feature is used as an item feature at the $h^{th}$ layer, so that users with whom an item interacts can be intuitively learned of. For example, the plurality of item features may be aggregated into one item feature in a manner of averaging, where aggregation may be performed by using the following "Formula 6".

$$p_v^h = \frac{1}{\sqrt{|\{i | v^i = v\}|}} \Sigma_{\{i | v^i = v\}} p_{v^i, i}^{(h)} \quad (6)$$

Herein, $p_v^h$ is an item feature obtained through aggregation at the $h^{th}$ layer, and $p_{v^i, x}^{(h)}$ is an item feature obtained at the $h^{th}$ layer based on an $x^{th}$ user feature.

Finally, after the quantity of convolution times reaches the preset quantity of times, for an item feature at any node, the item feature may be refined based on item features obtained at the convolutional layers, to obtain a final item feature. For example, the item features obtained at the convolution layers may be averaged, and an obtained average value is used as a finally required item feature, where the following "Formula 7" may be used for calculation.

$$\hat{p}_v = \frac{1}{H+1} \Sigma_{h=0}^H p_v^{(h)} \quad (\text{Formula } 7)$$

Herein, $\hat{p}_v$ is the item feature finally obtained through calculation, $H$ is the quantity of the convolution layers, and $p_v^{(h)}$ is the item feature obtained at the $h^{th}$ layer.

It should be understood that, in addition to performing refining in an average manner, refining may be performed in another manner (for example, by using a variance). This is not limited herein. In addition, after convolution is completed, in addition to refining the item feature, an item feature obtained at a last time may be directly used as the finally required item feature. This may be specifically determined based on an actual situation, and this is not limited herein.

(3) Context feature

For the context feature, information about the user feature and the item feature may be first transferred to an intent feature associated with the context feature. Details may be shown in the following "Formula 8."

$$p_{t^i}^{(h)} = p_{u^i}^{(h-1)} + p_{v^i}^{(h-1)} \quad (8)$$

Herein, $p_{t^i}^{(h)}$ is an intent feature that is associated with the $i^{th}$ user and that is at the $h^{th}$ layer in the convolutional graph; $p_{u^i}^{(h-1)}$ is a user feature of the $i^{th}$ user at the $(h - 1)^{th}$ layer in the convolutional graph; and $p_{v^i}^{(h-1)}$ is an item feature that is associated with the intent feature $p_{t^i}^{(h)}$ and that is at the $(h - 1)^{th}$ layer.

In addition, the user feature of the $i^{th}$ user at the $h^{th}$ layer and a context feature that is associated with the intent feature $p_{t^i}^{(h)}$ and that is at the $(h - 1)^{th}$ layer in the convolutional graph may be processed by using the foregoing "Formula 1", to obtain a weight value $\alpha_z^i$ corresponding to the context feature. Then, a feature that corresponds to the context feature and that is at the $h^{th}$ layer in the convolutional graph may be determined by using the following "Formula 9."

$$p_{c_z^i}^{(h)} = \alpha_z^i p_{t^i}^{(h)} \quad (9)$$

Herein, $p_{c_z^i}^{(h)}$ is a context feature that is associated with the intent feature $p_{t^i}^{(h)}$ and that is at the $h$th layer in the convolutional graph; $\alpha_z^i$ is obtained by processing a context feature at a node corresponding to the user feature of the $i$th user at the $h$th layer in the convolutional graph and a context feature $p_{c_z^i}^{(h)}$ at the $(h - 1)$th layer in the convolutional graph.

For each context feature, when there are a plurality of user features associated with the context feature, one context feature may be calculated by using each user feature. In this case, a plurality of context features may be obtained. To reduce a subsequent calculation amount and improve a calculation speed, these context features may be aggregated into one context feature, and the context feature is used as a context feature at the $h$th layer, so that items with which the user interacts and a context in which the user interacts with the items can be intuitively learned. For example, the plurality of context features may be aggregated into one context feature in a manner of averaging, where aggregation may be performed by using the following "Formula 10".

$$p_{c_z}^h = \frac{1}{\sqrt{|\{i|c_z^i=c_z\}|}} \Sigma_{\{i|c_z^i=c_z\}} p_{c_z^i,x}^{(h)} \quad (10)$$

$p_{c_z}^h$ is a context feature obtained through aggregation at the $h$th layer, and $p_{c_z^i,x}^{(h)}$ is a context feature obtained at the $h$th layer based on an $x$th user feature.

Finally, after the quantity of convolution times reaches the preset quantity of times, for a context feature at any node, the context feature may be refined based on context features obtained at the convolutional layers, to obtain a final context feature. For example, the context features obtained at the convolution layers may be averaged, and an obtained average value is used as a finally required context feature, where the following "Formula 11" may be used for calculation.

$$\hat{p}_{c_z} = \frac{1}{H+1} \Sigma_{h=0}^H p_{c_z}^{(h)} \quad (11)$$

Herein, $\hat{p}_{c_z}$ is the context feature finally obtained through calculation, $H$ is the quantity of the convolution layers, and $p_{c_z}^{(h)}$ is the context feature obtained at the $h$th layer.

It should be understood that, in addition to performing refining in an average manner, refining may be performed in another manner (for example, by using a variance). This is not limited herein. In addition, after convolution is completed, in addition to refining the context feature, a context feature obtained at a last time may be directly used as the finally required context feature. This may be specifically determined based on an actual situation, and this is not limited herein.

In addition, after the context feature $p_{c_z}^h$ at the $h$th layer in the convolutional graph is obtained, the context feature may be transferred back to an intent node. The context feature and the user feature at the $h$th layer may be first processed by using the foregoing "Formula 1", to obtain the intent feature at the $h$th layer.

After a convolution operation is performed, a refined user feature/item feature/context feature may be obtained:

$$p_{s_i} = \left[ \hat{p}_{u^i}, \ \hat{p}_{v^i}, \ \hat{p}_{c^i} \right]$$

Herein, $\hat{p}_{u^i}$ is the user feature, $\hat{p}_{v^i}$ is the item feature, and $\hat{p}_{c^i}$ is the context feature.

In some embodiments, when one context feature is associated with a plurality of intent features, the foregoing convolution process on the context feature may be affected by noise. Therefore, to reduce a noise impact, an intent feature closely related to the context feature may be first selected from the intent features, and then the convolution operation is performed. In addition, for the context feature, because some intent features are discarded, a calculation amount can be reduced subsequently, thereby improving a calculation speed and model training efficiency.

In a possible implementation, a first similarity value between the context feature and each intent feature may be first determined by using a Euclidean distance algorithm, an absolute value algorithm, a cosine similarity algorithm, or the like. Then, an average similarity value is determined based on these first similarity values. Then, a second similarity value between each intent feature and the average similarity value may be determined. Finally, if the second similarity value is less than a value of a preset similarity, it indicates that a similarity between the context feature and the intent feature corresponding to the second similarity value is high. Therefore, the intent feature corresponding to the second distance may be retained. If the second similarity value is not less than the value of the preset similarity, it indicates that the similarity between the context feature and the intent feature corresponding to the second similarity value is low. In this case, the intent feature may be noise, and the intent feature may be discarded.

The recommendation module 230 is mainly configured to recommend a service to a target user based on the features output by the graph convolution module 220. For example, the recommendation module 230 may match a context feature of the target user in a current environment with the features output by the graph convolution module 220, to recommend, to the target user, an item that matches the context feature of the target user in the current environment.

Next, based on the content described above, a recommendation method provided in an embodiment of this application is described. It may be understood that the method is proposed based on the content described above. For some or all content in the method, refer to the foregoing related descriptions.

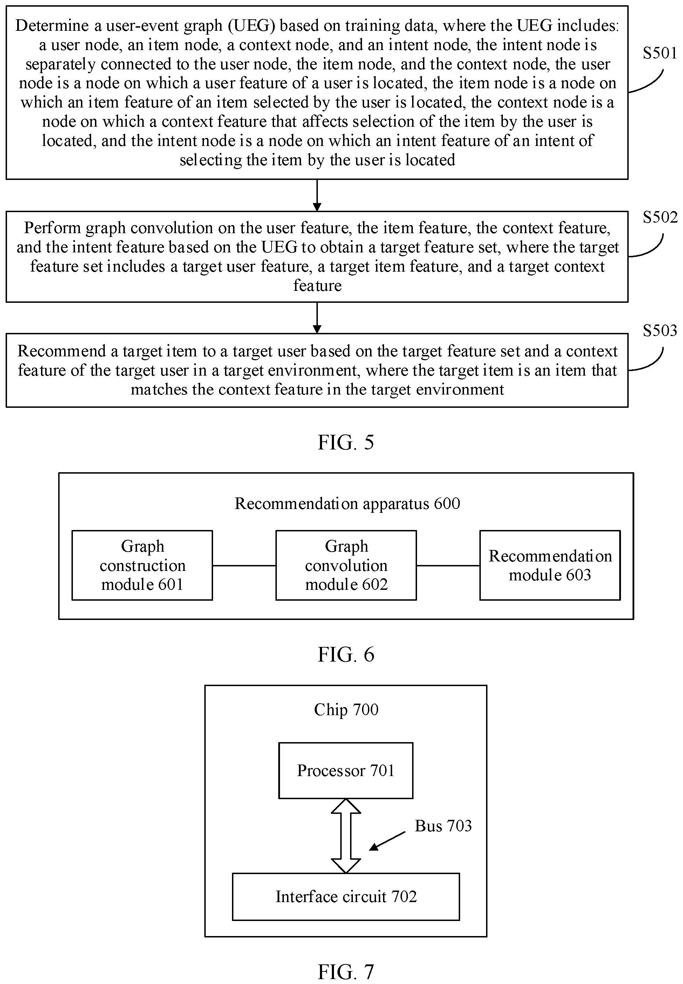

FIG. 5 is a schematic flowchart of a recommendation method according to an embodiment of this application. It may be understood that the method may be performed by any apparatus, device, platform, or device cluster that has computing and processing capabilities. As shown in FIG. 5, the recommendation method includes the following steps.

S501: Determine a user-event graph (UEG) based on training data, where the UEG includes: a user node, an item node, a context node, and an intent node, the intent node is separately connected to the user node, the item node, and the context node, the user node is a node on which a user feature of a user is located, the item node is a node on which an item feature of an item selected by the user is located, the context node is a node on which a context feature that affects selection of the item by the user is located, and the intent node is a node on which an intent feature of an intent of selecting the item by the user is located.

In this embodiment, the training data may be but is not limited to data preconfigured by the user. The data may include data related to the user feature, data related to the item feature, and data related to the context feature. After the training data is configured by the user, the user-event graph (UEG) may be determined based on the training data. The UEG includes the user node, the item node, the context node, and the intent node. The intent node is separately connected to the user node, the item node, and the context node, the user node is the node on which the user feature of the user is located, the item node is the node on which the item feature of the item selected by the user is located, the context node is the node on which the context feature that affects selection of the item by the user is located, and the intent node is the node on which the intent feature of the intent of selecting the item by the user is located. For example, the UEG may be shown in FIG. 3 or FIG. 4. For example, this step may be performed by but is not limited to the graph construction module 210 in FIG. 2.

In some embodiments, the intent feature in the UEG may be obtained based on the user feature and the context feature. When there are a plurality of context features, weight values of the context features may be first determined based on the user feature and the context feature. Then, the intent feature is determined based on the context features and the weight values of the context features. For details, refer to the foregoing "Formula 1".

S502: Perform graph convolution on the user feature, the item feature, the context feature, and the intent feature based on the UEG, to obtain a target feature set, where the target feature set includes a target user feature, a target item feature, and a target context feature.

In this embodiment, after the UEG is obtained, graph convolution may be performed on the user feature, the item feature, the context feature, and the intent feature based on the UEG to obtain the target feature set, where the target feature set includes the target user feature, the target item feature, and the target context feature. For example, this step may be performed by but is not limited to the graph convolution module 220 in FIG. 2.

In some embodiments, for the target user feature, based on a first intent feature at an $(h - 1)^{th}$ layer in a convolutional graph and an item feature that is associated with the first intent feature and that is at the $(h - 1)^{th}$ layer, a first user feature that is associated with the first intent feature and that is at an $h^{th}$ layer in the convolutional graph may be determined (for details, refer to the description in the foregoing "Formula 2"). When a quantity of convolution times in the convolutional graph reaches a preset quantity of times, the target user feature is determined based on first user features obtained at layers in the convolutional graph. For example, the user feature obtained at a last time of convolution may be used as the target user feature, or the target user feature may be obtained by using the foregoing "Formula 4".

In addition, when there are a plurality of item features that are associated with the first intent feature and that are at the $(h - 1)^{th}$ layer, for any item feature associated with the first intent feature, a second user feature that is associated with the first intent feature and that is at the $h^{th}$ layer may be separately determined based on the any item feature and the first intent feature at the $(h - 1)^{th}$ layer, to obtain a plurality of second user features. For example, the first intent feature at the $(h - 1)^{th}$ layer and the any item feature may be processed by using the foregoing "Formula 2", to obtain the second user feature that is associated with the first intent feature and that is at the $h^{th}$ layer. Then, the first user feature that is associated with the first intent feature and that is at the $h^{th}$ layer may be determined based on the plurality of second user features, that is, one first user feature may be obtained by aggregating the plurality of second user features. For example, the plurality of second user features may be processed by using the foregoing "Formula 3". Finally, when the quantity of convolution times in the convolutional graph reaches the preset quantity of times, the target user feature is determined based on the first user features obtained at the layers in the convolutional graph.

For the target item feature, a first item feature at the $h^{th}$ layer in the convolutional graph may be first determined based on a user feature that is associated with the first item feature and that is at the $(h-1)^{th}$ layer in the convolutional graph and an intent feature that is associated with the first item feature and that is at the $(h-1)^{th}$ layer (for details, refer to the descriptions in the foregoing "Formula 5"). Then, when the quantity of convolution times in the convolutional graph reaches the preset quantity of times, the target item feature is determined based on first item features obtained at the layers in the convolutional graph. For example, the item feature obtained at the last time of convolution may be used as the target item feature, or the target item feature may be obtained by using the foregoing "Formula 7".

In addition, when there are a plurality of user features that are associated with the first item feature and that are at the $(h-1)^{th}$ layer, for any user feature associated with the first intent feature, a second item feature at the $h^{th}$ layer is separately determined based on the any user feature and the intent feature that is associated with the first item feature and that is at the $(h-1)^{th}$ layer, to obtain a plurality of second item features. For example, any user feature at the $(h-1)^{th}$ layer and the intent feature that is associated with the first item feature and that is at the $(h-1)^{th}$ layer may be processed by using the foregoing "Formula 5", to obtain the second item feature at the $h^{th}$ layer. Then, the first item feature at the $h^{th}$ layer may be determined based on the plurality of second item features, that is, one first item feature may be obtained by aggregating the plurality of second item features. For example, the plurality of second item features may be processed by using the foregoing "Formula 6". Finally, when the quantity of convolution times in the convolutional graph reaches the preset quantity of times, the target item feature is determined based on the first item features obtained at the layers in the convolutional graph.

For the target context feature, a first intent feature at the $h^{th}$ layer in the convolutional graph may be first determined based on a user feature and an item feature that are associated with the first intent feature and that are at the $(h-1)^{th}$ layer in the convolutional graph. For example, the first intent feature at the $h^{th}$ layer in the convolutional graph may be determined by using the foregoing "Formula 8".

Then, a first context feature at the $h^{th}$ layer may be determined based on the first intent feature at the $h^{th}$ layer, a first context feature that is associated with the first intent feature and that is at the $(h-1)^{th}$ layer, and a first user feature that is associated with the first intent feature and that is at the $h^{th}$ layer. For example, the first user feature that is associated with the first intent feature and that is at the $h^{th}$ layer and the first context feature that is associated with the first intent feature and that is at the $(h-1)^{th}$ layer may be first processed by using the foregoing "Formula 1", to determine a weight value corresponding to the first context feature. Then, the first intent feature at the $h^{th}$ layer and the determined weight are processed by using the foregoing "Formula 9", to obtain the first context feature at the $h^{th}$ layer.

Finally, when the quantity of convolution times in the convolutional graph reaches the preset quantity of times, the target context feature is determined based on first context features obtained at the layers in the convolutional graph. For example, the context feature obtained at the last time of convolution may be used as the target context feature, or the target context feature may be obtained by using the foregoing "Formula 11".

In addition, when there are a plurality of user features that are associated with the first context feature and that are at the $h^{th}$ layer, for any user feature associated with the first context feature, a second context feature at the $h^{th}$ layer is separately determined based on the any user feature, the first intent feature at the $h^{th}$ layer, and the first context feature that is associated with the first intent feature and that is at the $(h-1)^{th}$ layer, to obtain a plurality of second context features. For example, any user feature at the $h^{th}$ layer, the first intent feature at the $h^{th}$ layer, and the first context feature that is associated with the first intent feature and that is at the $(h-1)^{th}$ layer may be first processed by using the foregoing "Formula 9", to obtain the second context feature at the $h^{th}$ layer. Then, the first context feature at the $h^{th}$ layer may be determined based on the plurality of second context features, that is, one first context feature may be obtained by aggregating the plurality of second context features. For example, the plurality of second context features may be processed by using the foregoing "Formula 10". Finally, when the quantity of convolution times in the convolutional graph reaches the preset quantity of times, the target context feature is determined based on the first context features obtained at the layers in the convolutional graph.

In some embodiments, when there are a plurality of first intent features associated with one first context feature, the plurality of first intent features are screened in at least one convolution process, to obtain a required first intent feature, where a similarity value between the required first intent feature and the first context feature is greater than a preset similarity value. In this way, a noise impact is eliminated, and calculation efficiency and accuracy are improved.

After the target user feature, the target item feature, and the target context feature are determined, S503 may be performed.

S503: Recommend a target item to a target user based on the target feature set and a context feature of the target user in a target environment, where the target item is an item that matches the context feature in the target environment.

In this embodiment, after the context feature of the target user in the target environment is obtained, the target user and the context feature corresponding to the target user may be matched with the target feature set, to obtain the target item that is suitable for the target user and that matches the context feature in the target environment, and recommend the target item to the target user.

In this way, the user node, the item node, and the context node are associated through the intent node, so that the context feature can be integrated into the graph convolution, thereby obtaining a better user feature and a better item feature, and improving accuracy of a subsequent recommendation service.

Based on the method in the foregoing embodiments, an embodiment of this application provides a recommendation apparatus.

As shown in FIG. 6, the recommendation apparatus 600 includes a graph construction module 601, a graph convolution module 602, and a recommendation module 603. The graph construction module 601 is configured to determine a user-event graph (UEG) based on training data, where the UEG includes: a user node, an item node, a context node, and an intent node, the intent node is separately connected to the user node, the item node, and the context node, the user node is a node on which a user feature of a user is located, the item node is a node on which an item feature of an item selected by the user is located, the context node is a node on which a context feature that affects selection of the item by the user is located, and the intent node is a node on which an intent feature of an intent of selecting the item by the user is located. The graph convolution module 602 is configured to perform graph convolution on the user feature, the item feature, the context feature, and the intent feature based on the UEG, to obtain a target feature set, where the target feature set includes a target user feature, a target item feature, and a target context feature. The recommendation module 603 is configured to recommend a target item to a target user based on the target feature set and a context feature of the target user in a target environment, where the target item is an item that matches the context feature in the target environment. For example, the graph construction module 601 may be but is not limited to the same as the graph construction module 210 in FIG. 2. The graph convolution module 602 may be but is not limited to the same as the graph convolution module 220 in FIG. 2. The recommendation module 603 may be but is not limited to the recommendation module 230 in FIG. 2.

In some embodiments, the intent feature is obtained based on the user feature and the context feature.

In some embodiments, there are a plurality of context features. The graph convolution module 602 is further configured to: determine weight values of the context features based on the user feature and the context feature; and determine the intent feature based on the context features and the weight values of the context features.

In some embodiments, the graph convolution module 602 is specifically configured to: determine, based on a first intent feature at an $(h - 1)^{th}$ layer in a convolutional graph and an item feature that is associated with the first intent feature and that is at the $(h - 1)^{th}$ layer, a first user feature that is associated with the first intent feature and that is at an $h^{th}$ layer in the convolutional graph; and when a quantity of convolution times in the convolutional graph reaches a preset quantity of times, determine the target user feature based on first user features obtained at layers in the convolutional graph.

Further, the graph convolution module 602 is further configured to: when there are a plurality of item features that are associated with the first intent feature and that are at the $(h - 1)^{th}$ layer, for any item feature associated with the first intent feature, separately determine, based on the any item feature and the first intent feature at the $(h - 1)^{th}$ layer, a second user feature that is associated with the first intent feature and that is at the $h^{th}$ layer, to obtain a plurality of second user features; determine, based on the plurality of second user features, the first user feature that is associated with the first intent feature and that is at the $h^{th}$ layer; and when the quantity of convolution times in the convolutional graph reaches the preset quantity of times, determine the target user feature based on the first user features obtained at the layers in the convolutional graph.

In some embodiments, the graph convolution module 602 is specifically configured to: determine, based on a user feature that is associated with a first item feature and that is at the $(h - 1)^{th}$ layer in the convolutional graph and an intent feature that is associated with the first item feature and that is at the $(h - 1)^{th}$ layer, the first item feature at the $h^{th}$ layer in the convolutional graph; and when the quantity of convolution times in the convolutional graph reaches the preset quantity of times, determine the target item feature based on first item features obtained at the layers in the convolutional graph.

Further, the graph convolution module 602 is further configured to: when there are a plurality of user features that are associated with the first item feature and that are at the $(h - 1)^{th}$ layer, for any user feature associated with the first intent feature, separately determine, based on the any user feature and the intent feature that is associated with the first item feature and that is at the $(h - 1)^{th}$ layer, a second item feature at the $h^{th}$ layer, to obtain a plurality of second item features; determine, based on the plurality of second item features, the first item feature at the $h^{th}$ layer; and when the quantity of convolution times in the convolutional graph reaches the preset quantity of times, determine the target item feature based on the first item features obtained at the layers in the convolutional graph.

In some embodiments, the graph convolution module 602 is specifically configured to: determine a first intent feature at the $h^{th}$ layer in the convolutional graph based on an item feature and a user feature that are associated with the first intent feature and that are at the $(h - 1)^{th}$ layer in the convolutional graph; determine, based on the first intent feature at the $h^{th}$ layer, a first context feature that is associated with the first intent feature and that is at the $(h - 1)^{th}$ layer, and a first user feature that is associated with the first intent feature and that is at the $h^{th}$ layer, a first context feature at the $h^{th}$ layer; and when the quantity of convolution times in the convolutional graph reaches the preset quantity of times, determine the target context feature based on first context features obtained at the layers in the convolutional graph.

Further, the graph convolution module 602 is further configured to: when there are a plurality of user features that are associated with the first context feature and that are at the $h^{th}$ layer, for any user feature associated with the first context feature, separately determine, based on the any user feature, the first intent feature at the $h^{th}$ layer, and a first context feature that is associated with the first intent feature and that is at the $(h - 1)^{th}$ layer, a second context feature at the $h^{th}$ layer, to obtain a plurality of second context features; determine, based on the plurality of second context features, the first context feature at the $h^{th}$ layer; and when the quantity of convolution times in the convolutional graph reaches the preset quantity of times, determine the target context feature based on the first context features obtained at the layers in the convolutional graph.

In some embodiments, the graph convolution module 602 is further configured to: when there are a plurality of first intent features associated with one first context feature, screen the plurality of first intent features in at least one convolution process, to obtain a required first intent feature, where a similarity value between the required first intent feature and the first context feature is greater than a preset similarity value.

It should be understood that the foregoing apparatus is configured to perform the method in the foregoing embodiments. An implementation principle and a technical effect of a corresponding program module in the apparatus are similar to those described in the foregoing method. For a working process of the apparatus, refer to a corresponding process in the foregoing method. Details are not described herein again.

According to the method in the foregoing embodiments, an embodiment of this application provides an electronic device. This electronic device may include: at least one memory, configured to store a program; and at least one processor, configured to execute the program stored in the memory. When the program stored in the memory is executed, the processor is configured to perform the method in the foregoing embodiments.

According to the method in the foregoing embodiments, an embodiment of this application provides a computer-readable storage medium. The computer-readable storage medium stores a computer program. When the computer program is run on a processor, the processor is caused to perform the method in the foregoing embodiments.

Based on the method in the foregoing embodiments, an embodiment of this application provides a computer program product. When the computer program product runs on a processor, the processor is caused to perform the method in the foregoing embodiments.

According to the method in the foregoing embodiments, an embodiment of this application further provides a chip. FIG. 7 is a diagram of a structure of a chip according to an embodiment of this application. As shown in FIG. 7, a chip 700 includes one or more processors 701 and an interface circuit 702. Optionally, the chip 700 may further include a bus 703.

The processor 701 may be an integrated circuit chip and has a signal processing capability. In an implementation process, the steps in the foregoing method may be completed by using a hardware integrated logic circuit in the processor 701, or by using instructions in a form of software. The processor 701 may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor 701 may implement or perform the methods and steps that are disclosed in embodiments of this application. The general-purpose processor may be a microprocessor, or the processor may be any conventional processor, or the like.

The interface circuit 702 may be configured to send or receive data, instructions, or information. The processor 701 may process the data, the instructions, or other information received through the interface circuit 702, and send, through the interface circuit 702, information obtained through processing.

Optionally, the chip 700 further includes a memory. The memory may include a read-only memory and a random access memory, and provide operation instructions and data for the processor. A part of the memory may further include a non-volatile random access memory (NVRAM).

Optionally, the memory stores an executable software module or a data structure, and the processor may perform a corresponding operation by invoking operation instructions (the operation instructions may be stored in an operating system) stored in the memory.

Optionally, the interface circuit 702 may be configured to output an execution result of the processor 701.

It should be noted that functions corresponding to each of the processor 701 and the interface circuit 702 may be implemented by using a hardware design, or may be implemented by using a software design, or may be implemented by using a combination of software and hardware. This is not limited herein.

It should be understood that steps in the foregoing method embodiments may be implemented by using a logic circuit in a form of hardware or instructions in a form of software in the processor.

It may be understood that sequence numbers of the steps do not mean execution sequences in the foregoing embodiments. The execution sequences of the processes should be determined based on functions and internal logic of the processes, and should not be construed as any limitation on the implementation processes of embodiments of this application. In addition, in some possible implementations, the steps in the foregoing embodiments may be selectively performed, or may be partially performed, or may be completely performed based on an actual situation. This is not limited herein.

It can be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any

**EP 4 538 902 A1**

conventional processor.

The method steps in embodiments of this application may be implemented in a hardware manner, or may be implemented in a manner of executing software instructions by the processor. The software instructions may include corresponding software modules. The software modules may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When the software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

It may be understood that various numbers in embodiments of this application are merely used for differentiation for ease of description, and are not used to limit the scope of embodiments of this application.

**Claims**

1. A recommendation method, wherein the method comprises:

   determining a user-event graph (UEG) based on training data, wherein the UEG comprises: a user node, an item node, a context node, and an intent node, the intent node is separately connected to the user node, the item node, and the context node, the user node is a node on which a user feature of a user is located, the item node is a node on which an item feature of an item selected by the user is located, the context node is a node on which a context feature that affects selection of the item by the user is located, and the intent node is a node on which an intent feature of an intent of selecting the item by the user is located;
   performing graph convolution on the user feature, the item feature, the context feature, and the intent feature based on the UEG, to obtain a target feature set, wherein the target feature set comprises a target user feature, a target item feature, and a target context feature; and
   recommending a target item to a target user based on the target feature set and a context feature of the target user in a target environment, wherein the target item is an item that matches the context feature in the target environment.

2. The method according to claim 1, wherein the intent feature is obtained based on the user feature and the context feature.

3. The method according to claim 2, wherein there are a plurality of context features, and the method further comprises:

   separately determining weight values of the context features based on the user feature and the context features; and
   determining the intent feature based on the context features and the weight values of the context features.

4. The method according to any one of claims 1 to 3, wherein the performing graph convolution on the user feature, the item feature, the context feature, and the intent feature based on the UEG, to obtain a target user feature specifically comprises:

determining, based on a first intent feature at an (h-1)th layer in a convolutional graph and an item feature that is associated with the first intent feature and that is at the (h-1)th layer, a first user feature that is associated with the first intent feature and that is at an hth layer in the convolutional graph; and

when a quantity of convolution times in the convolutional graph reaches a preset quantity of times, determining the target user feature based on first user features obtained at layers in the convolutional graph.

5. The method according to claim 4, wherein the method further comprises:

when there are a plurality of item features that are associated with the first intent feature and that are at the (h-1)th layer, for any item feature associated with the first intent feature, separately determining, based on the any item feature and the first intent feature at the (h-1)th layer, a second user feature that is associated with the first intent feature and that is at the hth layer, to obtain a plurality of second user features;

determining, based on the plurality of second user features, the first user feature that is associated with the first intent feature and that is at the hth layer; and

when the quantity of convolution times in the convolutional graph reaches the preset quantity of times, determining the target user feature based on the first user features obtained at the layers in the convolutional graph.

6. The method according to any one of claims 1 to 5, wherein the performing graph convolution on the user feature, the item feature, the context feature, and the intent feature based on the UEG, to obtain a target item feature specifically comprises:

determining, based on a user feature that is associated with a first item feature and that is at the (h-1)th layer in the convolutional graph and an intent feature that is associated with the first item feature and that is at the (h-1)th layer, a first item feature at the hth layer in the convolutional graph; and

when the quantity of convolution times in the convolutional graph reaches the preset quantity of times, determining the target item feature based on first item features obtained at the layers in the convolutional graph.

7. The method according to claim 6, wherein the method further comprises:

when there are a plurality of user features that are associated with the first item feature and that are at the (h-1)th layer, for any user feature associated with the first intent feature, separately determining, based on the any user feature and the intent feature that is associated with the first item feature and that is at the (h-1)th layer, a second item feature at the hth layer, to obtain a plurality of second item features;

determining, based on the plurality of second item features, the first item feature at the hth layer; and

when the quantity of convolution times in the convolutional graph reaches the preset quantity of times, determining the target item feature based on the first item features obtained at the layers in the convolutional graph.

8. The method according to any one of claims 1 to 7, wherein the performing graph convolution on the user feature, the item feature, the context feature, and the intent feature based on the UEG, to obtain a target context feature specifically comprises:

determining, based on a user feature and an item feature that are associated with the first intent feature and that are at the (h-1)th layer in the convolutional graph, a first intent feature at the hth layer in the convolutional graph;

determining, based on the first intent feature at the hth layer, a first context feature that is associated with the first intent feature and that is at the (h-1)th layer, and a first user feature that is associated with the first intent feature and that is at the hth layer, a first context feature at the hth layer; and

when the quantity of convolution times in the convolutional graph reaches the preset quantity of times, determining the target context feature based on first context features obtained at the layers in the convolutional graph.

9. The method according to claim 8, wherein the method further comprises:

when there are a plurality of user features that are associated with the first context feature and that are at the hth layer, for any user feature associated with the first context feature, separately determining, based on the any user feature, the first intent feature at the hth layer, and the first context feature that is associated with the first intent feature and that is at the (h-1)th layer, a second context feature at the hth layer, to obtain a plurality of second context features;

determining, based on the plurality of second context features, the first context feature at the $h^{th}$ layer; and

when the quantity of convolution times in the convolutional graph reaches the preset quantity of times, determining the target context feature based on the first context features obtained at the layers in the convolutional graph.

10. The method according to any one of claims 1 to 9, wherein the method further comprises:

when one first context feature is associated with a plurality of first intent features, screening the plurality of first intent features in at least one convolution process, to obtain a required first intent feature, wherein a similarity value between the required first intent feature and the first context feature is greater than a preset similarity value.

11. A recommendation apparatus, wherein the apparatus comprises:

a graph construction module, configured to determine a user-event graph (UEG) based on training data, wherein the UEG comprises: a user node, an item node, a context node, and an intent node, the intent node is separately connected to the user node, the item node, and the context node, the user node is a node on which a user feature of a user is located, the item node is a node on which an item feature of an item selected by the user is located, the context node is a node on which a context feature that affects selection of the item by the user is located, and the intent node is a node on which an intent feature of an intent of selecting the item by the user is located;

a graph convolution module, configured to perform graph convolution on the user feature, the item feature, the context feature, and the intent feature based on the UEG, to obtain a target feature set, wherein the target feature set comprises a target user feature, a target item feature, and a target context feature; and

a recommendation module, configured to recommend a target item to a target user based on the target feature set and a context feature of the target user in a target environment, wherein the target item is an item that matches the context feature in the target environment.

12. An electronic device, comprising:

at least one memory, configured to store a program; and

at least one processor, configured to execute the program stored in the memory, wherein

when the program stored in the memory is executed, the processor is configured to perform the method according to any one of claims 1 to 10.

13. A computer-readable storage medium, wherein the computer-readable storage medium stores a computer program, and when the computer program is run on a processor, the processor is caused to perform the method according to any one of claims 1 to 10.

14. A computer program product, wherein when the computer program product runs on a processor, the processor is caused to perform the method according to any one of claims 1 to 10.

15. A chip, comprising at least one processor and an interface, wherein

the at least one processor obtains program instructions or data through the interface; and

the at least one processor is configured to execute the program instructions, to implement the method according to any one of claims 1 to 10.

FIG. 1

Service recommendation model 200

| Graph construction module 210 | Graph convolution module 220 | Recommendation module 230 |

## FIG. 2

Ui-user feature
Qi-item feature
Vi-context feature
Ti-intent feature

## FIG. 3

Ui-user feature
Qi-item feature
Vi-context feature
Ti-intent feature

## FIG. 4

Determine a user-event graph (UEG) based on training data, where the UEG includes: a user node, an item node, a context node, and an intent node, the intent node is separately connected to the user node, the item node, and the context node, the user node is a node on which a user feature of a user is located, the item node is a node on which an item feature of an item selected by the user is located, the context node is a node on which a context feature that affects selection of the item by the user is located, and the intent node is a node on which an intent feature of an intent of selecting the item by the user is located

S501

Perform graph convolution on the user feature, the item feature, the context feature, and the intent feature based on the UEG to obtain a target feature set, where the target feature set includes a target user feature, a target item feature, and a target context feature

S502

Recommend a target item to a target user based on the target feature set and a context feature of the target user in a target environment, where the target item is an item that matches the context feature in the target environment

S503

FIG. 5

Recommendation apparatus 600

| Graph construction module 601 | Graph convolution module 602 | Recommendation module 603 |

FIG. 6

Chip 700

Processor 701

Bus 703

Interface circuit 702

FIG. 7

## INTERNATIONAL SEARCH REPORT

| International application No. |
| --- |
| **PCT/CN2023/100467** |

| A. | CLASSIFICATION OF SUBJECT MATTER |
| --- | --- |

G06F 16/2457(2019.01)i; G06F 16/25(2019.01)i

According to International Patent Classification (IPC) or to both national classification and IPC

| B. | FIELDS SEARCHED |
| --- | --- |

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 推荐, 商品, 物品, 产品, 知识图, 图卷积, 用户, 上下文, 意图, 偏好, 喜好, recommend, commodity, item, product, knowledge graph, graph convolution, user, context, intent, preference

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | CN 112364242 A (UNIVERSITY OF SCIENCE AND TECHNOLOGY OF CHINA) 12 February 2021 (2021-02-12)<br>description, paragraphs [0004]-[0010] and [0016]-[0068] | 1-15 |
| A | CN 112861012 A (HENAN UNIVERSITY OF TECHNOLOGY) 28 May 2021 (2021-05-28)<br>entire document | 1-15 |
| A | CN 111259235 A (QILU UNIVERSITY OF TECHNOLOGY) 09 June 2020 (2020-06-09)<br>entire document | 1-15 |
| A | CN 111949887 A (EAST CHINA UNIVERSITY OF SCIENCE AND TECHNOLOGY) 17 November 2020 (2020-11-17)<br>entire document | 1-15 |
| A | WO 2020140612 A1 (PING AN TECHNOLOGY (SHENZHEN) CO., LTD.) 09 July 2020 (2020-07-09)<br>entire document | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **08 September 2023** | **13 September 2023** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

INTERNATIONAL SEARCH REPORT
Information on patent family members

International application No.

**PCT/CN2023/100467**

| Patent document cited in search report | | | Publication date (day/month/year) | Patent family member(s) | Publication date (day/month/year) |
|---|---|---|---|---|---|
| CN | 112364242 | A | 12 February 2021 | None | |
| CN | 112861012 | A | 28 May 2021 | None | |
| CN | 111259235 | A | 09 June 2020 | None | |
| CN | 111949887 | A | 17 November 2020 | None | |
| WO | 2020140612 | A1 | 09 July 2020 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210743393X